# FASCICULE DE BREVET EUROPEEN

(11) **EP 1 517 478 B1**
(45) Date de publication et mention de la délivrance du brevet: **16.08.2006**
(21) Numéro de dépôt: 04292207.0
(22) Date de dépôt: 14.09.2004
(51) Int. Cl.: H04L 12/28, H04L 29/06

(54) **Procédé et système de contrôle de l'utilisation d'un point d'accès à un réseau, et supports d'enregistrement, point d'accès et équipement de contrôle pour la mise en oeuvre du procédé**
Verfahren und System zur Benutzungssteuerung eines Netzzugangspunktes sowie Speichermedien, Netzzugangspunkt und Kontrolleinrichtung zur Durchführung des Verfahrens
Method and system of controlling a network access point and recording media, access point and control device for carrying out said method

(30) Priorité: 16.09.2003 FR 0310877
(43) Date de publication de la demande: 23.03.2005
(73) Titulaire: FRANCE TELECOM, 75015 Paris (FR)
(72) Inventeur: Mathoorasing, Dean, 92130 Issy les Moulineaux (FR); Merida Campos, Carmen, 75015 Paris (FR)
(74) Mandataire: Fréchède, Michel

(56) Documents cités:
- WO-A-01/31843
- US-A1- 2003 115 345
- US-A1- 2003 118 045
- GARG S ET AL: "Wireless access server for quality of service and location based access control in 802.11 networks" PROCEEDINGS ISCC 2002 SEVENTH INTERNATIONAL SYMPOSIUM ON COMPUTERS AND COMMUNICATIONS, TAORMINA-GIARDINI NAXOS, ITALY, 1-4 JULY 2002, 2002, pages 819-824, XP010595853 LOS ALAMITOS, CA, USA, IEEE COMPUT. SOC, USA ISBN: 0-7695-1671-8

## Description

L'invention concerne un procédé et un système de contrôle de l'utilisation d'un point d'accès à un réseau de transmission d'informations. L'invention concerne également des supports d'enregistrement d'informations, un point d'accès et un équipement de contrôle pour la mise en oeuvre du procédé.

Un tel procédé est particulièrement utile pour lutter contre les pertes d'exploitation liées au partage d'un point d'accès à un réseau de transmission d'informations entre plusieurs utilisateurs.

Par exemple, un utilisateur peut souscrire un abonnement "ADSL" auprès d'un opérateur pour avoir chez lui un point d'accès au réseau de cet opérateur par l'intermédiaire d'une liaison haut débit. En contrepartie, un modem ADSL (Asymmetric Digital Subscriber Line) est installé chez l'abonné.

Aujourd'hui, un tel abonné peut très simplement raccorder ce modem à un réseau local sans fil du type WiFi ou Bluetooth. Pour cela, une borne de radiotélécommunication est raccordée à l'entrée du modem ADSL.

Grâce à un tel réseau sans fil, l'utilisateur peut raccorder, simultanément, plusieurs terminaux de télécommunication au modem et donc connecter ces terminaux au réseau de opérateur par l'intermédiaire d'un seul et même point d'accès. L'abonné peut donc partager son point d'accès au réseau de l'opérateur avec d'autres utilisateurs qui eux ne paient pas d'abonnement pour bénéficier d'un tel service.

Une passerelle d'un réseau sans fils permettant de faire du contrôle d'accès est connue de « Wireless Access Server for Quality of Service and Location Based Access Control in 802.11 Networks », GARG S. et al, Proceedings of the Seventh International Symposium on Computers and Communications, IEEE 2002.

Une étape de redirection vers une page d'identification est connue de WO 01/31843.

Un procédé pour limiter le nombre de connexions simultanées à travers d'une passerelle est connu de US 2003/0115345.

L'invention vise à remédier à cet inconvénient en proposant un procédé de contrôle de l'utilisation d'un point d'accès.

L'invention a donc pour objet un procédé de contrôle de l'utilisation d'un point d'accès conforme à la revendication 1.

Grâce au procédé ci-dessus, l'opérateur peut détecter la présence de plusieurs utilisateurs et ! ou terminaux indépendants connectés à son réseau par l'intermédiaire d'un même point d'accès, et peut également agir en conséquence. Par exemple, l'opérateur pourra entreprendre des actions comme interrompre la connexion à partir de ce point d'accès à son réseau ou alors en limiter le débit.

D'autres caractéristiques du procédé apparaissent dans les revendications dépendantes.

L'invention a également pour objet un support d'enregistrement d'informations, caractérisé en ce qu'il comporte des instructions pour la mise en oeuvre du procédé de contrôle conforme à l'invention, lorsque ces instructions sont exécutées par un point d'accès réalisé à partir d'un calculateur électronique programmable.

L'invention a également pour objet un support d'enregistrement d'informations, caractérisé en ce qu'il comporte des instructions pour l'exécution du procédé de contrôle conforme à l'invention, lorsque ces instructions sont exécutées par un équipement de contrôle réalisé à partir d'un calculateur électronique programmable.

L'invention a également pour objet un système de contrôle de l'utilisation d'un point d'accès conforme à la revendication 1.

D'autres caractéristiques du système apparaissent dans les revendications dépendantes.

L'invention a également pour objet un point d'accès à un réseau de transmission d'informations apte à être mis en ouvre dans un système de contrôle conforme à l'invention, ce point d'accès étant également apte à raccorder simultanément plusieurs terminaux de télécommunication indépendants audit réseau de transmission d'informations, caractérisé en ce qu'il est équipé du module de relevé.

L'invention a également pour objet un équipement de contrôle adapté pour être mis en oeuvre dans un système conforme à l'invention, cet équipement de contrôle étant également adapté pour être raccordé à chacun des points d'accès par l'intermédiaire du réseau de transmission d'informations, caractérisé en ce qu'il est équipé du module d'action.

L'invention sera mieux comprise à la lecture de la description qui va suivre donnée uniquement à titre d'exemple et faite en se référant aux dessins sur lesquels :
- la figure 1 est une vue schématique de l'architecture d'un système conforme à l'invention, et
- la figure 2 est un organigramme d'un procédé conforme à l'invention.

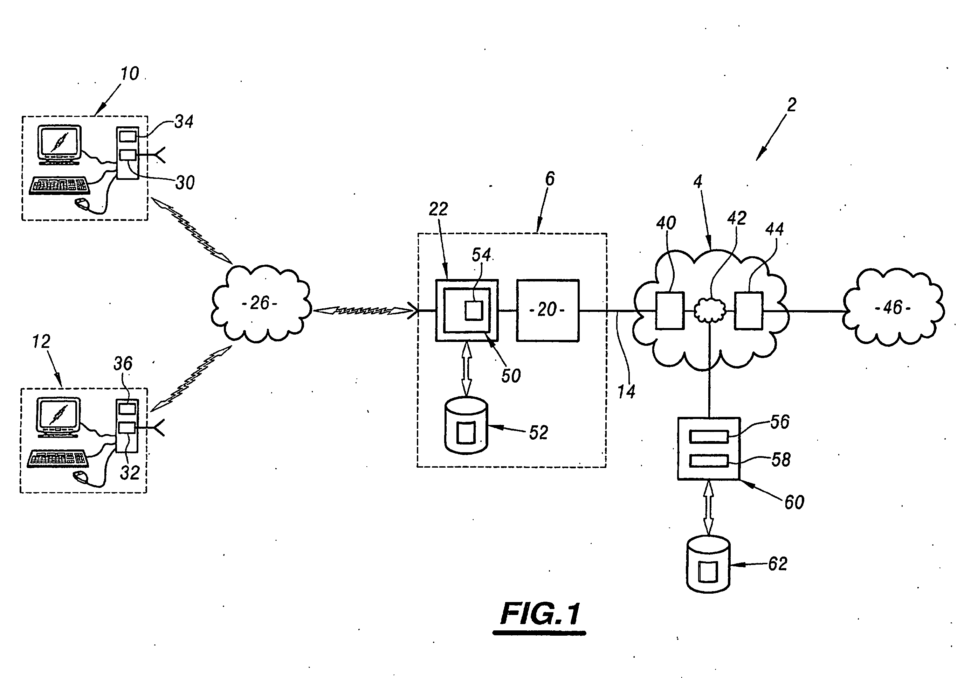

La figure 1 représente un système de télécommunication, désigné par la référence générale 2, comportant plusieurs points d'accès à un réseau 4 de transmission d'informations d'un opérateur. Pour simplifier l'illustration de la figure 1, seul un point d'accès 6 a été représenté. Les autres points d'accès (non représentés) sont, par exemple, identiques au point d'accès 6.

Le point d'accès 6 est propre à raccorder plusieurs terminaux indépendants de télécommunication 10,12 au réseau 4 par l'intermédiaire d'une liaison filaire commune 14. Ce point d'accès 6 est physiquement situé chez un abonné du réseau 4. Les terminaux sont dits indépendants car ils sont aptes à fonctionner indépendamment les uns des autres, et en particulier à se connecter au réseau 4 indépendamment les uns des autres. Chaque terminal comporte un identifiant propre à l'identifier de façon unique dans le système 2.

A cet effet, le point d'accès 6 comporte un modem 20 raccordé à une extrémité de la liaison filaire 14 et une borne de radiocommunication 22 raccordée à un port d'entrée du modem 20.

Le modem 20 est, par exemple, un modem ADSL propre à établir par l'intermédiaire de la liaison filaire 14 une seule connexion haut débit au réseau 4. Par haut débit on entend ici un débit strictement supérieur à 56 kbits/s et de préférence supérieur ou égal à 128 kbits/s, 256 kbits/s ou 1 Mbits/s

La borne 22 est propre à raccorder le modem 20 à un réseau local 26 auxquels sont raccordés les terminaux 10 et 12.

Le réseau local 26 est de préférence un réseau sans fil conforme à la norme WiFi ou à la norme Bluetooth. Ici, à titre d'exemple, le réseau 26 est un réseau WiFi.

Dans le mode de réalisation décrit ici, la borne 22 est capable d'établir une session ou une connexion au réseau 4 par l'intermédiaire du modem 20 lorsqu'elle reçoit des informations à destination de ce réseau 4. La borne 22 est donc capable de remplir le rôle d'un routeur.

A chaque session établie par la borne 22, un identifiant est attribué à cette session de manière à l'identifier de façon unique parmi toutes les sessions simultanément établies avec le réseau 4. Dans le cas particulier d'un modem ADSL puisque celui-ci reste connecté en permanence au réseau 4, l'identifiant de session est constant.

La borne 22 est également apte à identifier automatiquement l'identifiant de chaque terminal 10 ou 12 présent dans sa zone de couverture ou de visibilité radio.

Pour simplifier l'illustration de la figure 1, seuls deux terminaux 10 et 12 ont été représentés. Les terminaux 10 et 12 sont, par exemple, ici des ordinateurs équipés respectivement d'un navigateur internet et de cartes réseaux 30, 32 propres à les raccorder au réseau 26. L'adresse MAC (Medium Access Control) de chaque carte réseau forme ici l'identifiant du terminal. Grâce à ces cartes réseaux et à la borne 22, chaque terminal 10, 12 est apte à échanger des informations par l'intermédiaire du réseau sans fil 26 soit avec l'autre terminal, soit avec le réseau 4.

De plus, ici chacun des terminaux 10 et 12 est équipé d'un lecteur, respectivement 34 et 36, de cartes à puce. Les lecteurs de cartes à puce 34 et 36 sont destinés à recevoir une carte à puce telle qu'une carte SIM (Subscriber Identity Module) permettant d'identifier de façon sûre l'utilisateur du terminal. Une telle application est décrite, par exemple, dans la demande de brevet française FR-A-2815205.

Le réseau 4 est, par exemple, un réseau WAN (Wide Area Network) public.

Le réseau 4 comporte dans le mode de réalisation particulier décrit ici, une unité 40 DSLAM (Digital Subscriber Line Access Multiplexer), un sous-réseau 42 ATM (Asynchronous Transfer Mode) et un serveur 44 d'accès à la toile d'araignée mondiale 46 plus connue sous l'acronyme anglais de WEB (World Wide Web) et ici simplement appelé réseau internet.

L'unité 40 est raccordée à l'autre extrémité de la liaison 14 de manière à assurer l'interface entre cette liaison 14 et le sous-réseau ATM 42.

Le serveur d'accès 44 est apte à raccorder le sous-réseau 42 au réseau internet 46. Le réseau internet 46 est ici indépendant du réseau 4.

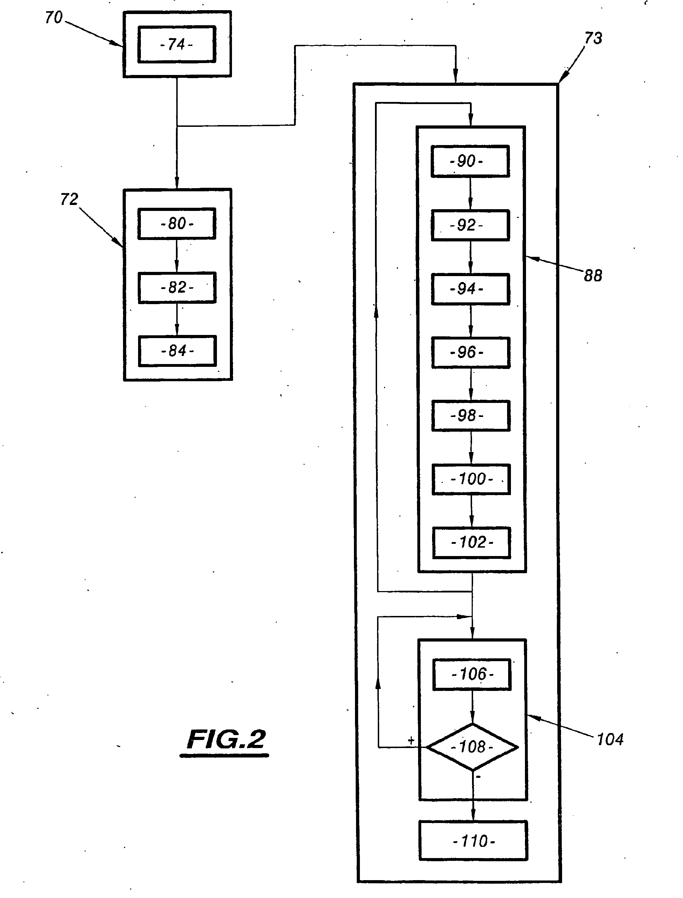

Le système 2 comporte un système de contrôle de l'utilisation de chaque point d'accès 6. A cet effet, il comporte un module 50 propre à relever des informations permettant de détecter la présence de plusieurs utilisateurs et de plusieurs terminaux connectés au réseau 4 par l'intermédiaire d'un même point d'accès. Ce module 50 est ici implémenté dans la borne 22 de chaque point d'accès. A cet effet, la borne 22 est, par exemple, réalisée à partir d'un calculateur électronique programmable conventionnel associé à une mémoire 52 contenant des instructions pour l'exécution du procédé de la figure 2 lorsqu'elles sont exécutées par ce calculateur.

De plus, cette mémoire 52 comporte un identificateur de la borne 22.

Plus précisément, le module 50 comporte un compteur 54 propre à dénombrer le nombre de terminaux actuellement connectés au réseau 4 par l'intermédiaire de la liaison 14.

Pour contrôler l'utilisation du point d'accès 6, le système 2 comporte également un module pour comparer les informations relevées par le module 50 à des critères d'accès prédéfinis pour chaque point d'accès, et un module 58 propre à limiter l'accès au réseau 4 si les informations relevées ne correspondent pas aux critères d'accès prédéfinis pour le point d'accès correspondant.

On entend ici par critères d'accès, à la fois des droits d'accès accordés par l'opérateur du réseau 4 aux différents utilisateurs de chaque point d'accès, mais aussi, et surtout, des limites imposées sur l'utilisation de chaque point d'accès.

De préférence, le système 2 comporte un équipement de contrôle 60 raccordé à chaque point d'accès du système 2 par l'intermédiaire du réseau 4. Les modules 56 et 58 sont implémentés dans cet équipement 60.

Par exemple, l'équipement 60 est réalisé à partir d'un calculateur électronique programmable conventionnel associé à une mémoire 62 contenant des instructions pour l'exécution du procédé de la figure 2 lorsque ces instructions sont exécutées par ce calculateur. Pour la mise en oeuvre du procédé de la figure 2, cette mémoire 62 contient une base de données relationnelle contenant les critères d'accès prédéfinis pour chaque point d'accès du système 2 et au moins une relation entre chaque identificateur de session et de borne et les critères d'accès prédéfinis correspondant. Ces critères d'accès comportent, par exemple, pour chaque identificateur de session et de borne :
- une liste d'identificateurs des utilisateurs autorisés à utiliser ce point d'accès,
- une liste contenant les identifiants des terminaux autorisés à se connecter au réseau 4 par l'intermédiaire de ce point d'accès, et
- un seuil maximum pour le nombre de terminaux simultanément connectés au réseau 4 à partir de ce point d'accès.

Le fonctionnement du système 2 va maintenant être décrit en regard du procédé de la figure 2.

Le procédé de la figure 2 comporte essentiellement trois phases, une phase d'initialisation 70 du contenu de la mémoire 62, une phase 72 d'utilisation du système 2 et une phase 73 de contrôle de l'utilisation de chaque point d'accès.

Le fonctionnement du système 2 sera décrit dans le cas particulier du point d'accès 6 et dans la situation où seul l'utilisateur du terminal 10 a souscrit à un abonnement auprès de l'opérateur du réseau 4.

Lors de la phase 70, à chaque installation d'un nouveau point d'accès tel que le point d'accès 6, l'opérateur enregistre dans la mémoire 62 lors d'une étape 74 les identifiants des terminaux autorisés à se connecter au réseau 4 par l'intermédiaire du point d'accès 6. L'opérateur enregistre également lors de cette étape, les identificateurs des utilisateurs autorisés à se connecter au réseau 4 par l'intermédiaire du point d'accès 6. Ces identificateurs d'utilisateurs sont ceux contenus dans les cartes SIM des utilisateurs. L'opérateur enregistre également le seuil maximum pour le nombre de terminaux simultanément connectés au réseau 4 à partir du point d'accès 6. Ainsi, à l'issue de l'étape 74, les critères d'accès au réseau 4 à partir du point d'accès 6 sont définis.

Dans le cas particulier décrit ici, à l'issue de l'étape 74, seul l'identifiant du terminal 10 et l'identificateur contenu dans la carte SIM de l'utilisateur du terminal 10 sont enregistrés dans la mémoire 62. De plus, ici, on supposera que le nombre de terminaux simultanément connectés est limité à 1 pour le point d'accès 6.

L'étape 74 est répétée pour chaque point d'accès au réseau 4. Ainsi, les critères d'accès enregistrés ne sont pas nécessairement les mêmes pour chaque point d'accès.

Une fois que les critères d'accès associés à un point d'accès particulier ont été définis, les utilisateurs de ce point d'accès peuvent procéder à la phase 72.

Initialement, l'utilisateur insère, lors d'une étape 80, sa carte SIM dans le lecteur 34.

Ensuite, il se connecte, lors d'une étape 82, au réseau 4 par l'intermédiaire du réseau local 26, du point d'accès 6, et de la liaison 14.

Une fois la connexion établie, l'utilisateur navigue, par exemple, sur le réseau internet 46, lors d'une opération 84.

Après que la connexion au réseau 4 ait été établie et parallèlement à la phase d'utilisation, la phase 73 de contrôle d'utilisation du point d'accès 6 est exécutée.

Lors de la phase 73, le module 50 relève en permanence, lors d'une étape 88, des informations propres à permettre la détection de la présence de plusieurs utilisateurs et de plusieurs terminaux indépendants connectés au réseau 4 par l'intermédiaire du point d'accès 6.

A cet effet, lors d'une opération 90, le module 50 relève l'adresse de destination des messages qui sont échangés par l'intermédiaire du réseau 26 et les compare aux adresses des terminaux raccordés à ce même réseau 26. Si l'adresse d'un des messages émis par l'un des terminaux ne correspond pas à l'adresse d'un des terminaux connectés au réseau 26, alors le module 50 identifie ce terminal comme étant connecté au réseau 4.

L'identifiant de chaque terminal identifié comme étant connecté au réseau 4 est enregistré, lors d'une opération 92, dans une table stockée dans la mémoire 52.

Ensuite, lors d'une opération 94, le module 50, relève l'identité des utilisateurs des terminaux connectés au réseau 26. A cet effet, par exemple, le module 50 relève l'identifiant de l'utilisateur stocké dans la carte SIM contenue dans le lecteur de cartes à puce de chaque terminal connecté au réseau 4.

Les identifiants des utilisateurs connectés au réseau 4 sont ensuite enregistrés, lors d'une opération 96, dans la table stockée dans la mémoire 52.

Finalement, le compteur 54 compte, lors d'une opération 98, le nombre de terminaux connectés au réseau 4 par l'intermédiaire du point d'accès 6. Ce nombre est ensuite enregistré, lors d'une opération 100, dans la table stockée dans la mémoire 52.

A la fin de l'étape 88, le module 50 envoie, lors d'une opération 102, une table contenant l'ensemble des informations relevées lors des opérations 90, 94 et 98, à l'équipement de contrôle 60. La table envoyée contient en plus l'identifiant de la borne 22 et l'identifiant de session. Cette table est envoyée à l'équipement 60 par l'intermédiaire du réseau 4.

Une fois l'envoi effectué, le module 50 procède à nouveau à l'opération 90 pour mettre à jour les informations contenues dans la table stockée dans la mémoire 52 et envoyer la table mise à jour à intervalles réguliers. Ainsi, des informations réactualisées continuellement sur l'utilisation de chaque point d'accès sont envoyées régulièrement à l'équipement de contrôle 60.

Le module 56 compare, lors d'une étape 104, les informations contenues dans chaque table envoyée, aux critères d'accès correspondants.

Lors de l'étape 104, le module 56 sélectionne, lors d'une opération 106, les critères d'accès correspondant au point d'accès 6 en utilisant à cet effet l'identifiant de borne et l'identifiant de session contenus dans la table envoyée.

Ensuite, le module 56 compare, lors d'une opération 108, les critères d'accès sélectionnés, aux informations contenues dans la table envoyée. Plus précisément, si chacun des identifiants d'utilisateurs et de terminaux envoyés correspondent à des identifiants contenus dans la mémoire 62 pour ce point d'accès 6, et si le nombre de terminaux simultanément connectés est inférieur ou égal au seuil maximal prédéfini pour le point d'accès 6, alors l'utilisation qui est faite du point d'accès 6 est conforme aux critères d'accès et le procédé réitère l'étape 104 pour une autre table envoyée.

Dans le cas contraire, une action est entreprise, lors d'une étape 110, pour limiter l'accès au réseau 4 par l'intermédiaire du point d'accès 6. Lors de cette étape 110, le module 58 effectue, par exemple, une ou plusieurs des actions suivantes :
- le module 58 commande l'unité 40 pour fermer la connexion ou la session entre le point d'accès 6 et le réseau 4,
- le module 58 commande l'unité 40 pour limiter le débit d'informations transmis vers le réseau 4 à partir du point d'accès 6,
- le module 58 commande le serveur 44 pour rediriger les utilisateurs du point d'accès 6 vers un autre serveur propre, par exemple, à afficher sur les terminaux connectés au point d'accès 6 un message d'avertissement ou un message invitant les utilisateurs à souscrire à un autre abonnement, et
- le module 58 limite les services auxquels peut accéder un utilisateur en limitant les ports d'accès aux services, par exemple au port 2021 qui correspond au service FTP (File Transfer Protocol).

Ainsi, grâce au procédé de la figure 2, l'opérateur du réseau 4 peut contrôler et empêcher que :
- le terminal 12 se connecte au réseau 4 par l'intermédiaire du point d'accès 6, et
- que l'utilisateur du terminal 12 se connecte au réseau 4 par l'intermédiaire du point d'accès 6 en utilisant le terminal 10.

L'opérateur du réseau 4 peut également limiter le nombre de terminaux simultanément connectés au réseau 4 à partir du point d'accès 6.

Le système 2 a été décrit dans le cas particulier où le point d'accès n'est raccordé au réseau 4 que par l'intermédiaire d'une seule connexion. Ainsi, si plusieurs terminaux utilisent simultanément cette connexion pour transmettre des informations vers le réseau 4, cela peut se traduire par une détérioration de la qualité de service pour chaque utilisateur de ces terminaux. Par exemple, la bande passante totale de la connexion sera partagée à parts égales entre les différents terminaux utilisant cette connexion. Pour remédier à ce problème, en variante, le point d'accès est capable d'établir simultanément plusieurs connexions avec le réseau 4. Par exemple, dans le cas où le réseau 4 est un réseau ATM, chaque connexion correspond à un circuit virtuel VC respectif. Dans ce cas, le point d'accès comporte autant de modules 50 que de connexions de manière à créer et à mettre à jour autant de tables dans la mémoire 52 que de connexions. Dans cette variante, le procédé de la figure 2 est, par exemple, reproduit à l'identique pour chacune des connexions.

Le système 2 a été décrit dans le cas particulier ou les modules 56 et 58 sont implémentés dans un équipement de contrôle commun à l'ensemble des points d'accès au réseau 4 du système 2. En variante, le module 56 est implémenté dans chacun des points d'accès du système 2 et de préférence, dans chacune des bornes de radiocommunication des points d'accès. Dans cette variante, la comparaison aux critères d'accès est réalisée par le point d'accès lui-même, de sorte que seul le résultat de cette comparaison est transmis au module 58 de l'équipement de contrôle 60. La quantité d'informations transmises entre les points d'accès et l'équipement 60 est donc réduite.

Il est également possible d'implémenter en plus du module 56, le module 58 dans chacun des points d'accès. Dans cette variante, chaque point d'accès entreprend lui-même les actions nécessaires pour limiter l'accès au réseau 4 lorsque les informations relevées ne correspondent pas aux critères d'accès. Il n'est donc plus nécessaire qu'un équipement de contrôle indépendant, tel que l'équipement 60, soit raccordé à chacun des points d'accès par l'intermédiaire du réseau 4.

La borne 22 a été décrite ici dans le cas particulier où celle-ci est capable d'établir la connexion avec le réseau 4. En variante, la borne 22 est dépourvue de cette capacité et ne remplit que les fonctions d'un pont. Ainsi, dans cette variante, l'un des terminaux raccordés au réseau 26 a la capacité d'établir la connexion au réseau 4 par l'intermédiaire du point d'accès 6. Ce terminal spécifique rempli donc, en plus, la fonction de routeur et les autres terminaux du réseau local se connectent au réseau 4 par son intermédiaire.

Le système 2 a été décrit dans le cas très particulier ou l'opérateur du réseau 4 souhaite à la fois contrôler le nombre de terminaux raccordés à un point d'accès, l'identité de chacun de ces terminaux ainsi que l'identité que chacun des utilisateurs de ces terminaux. En variante, seul un ou plusieurs de ces points sont contrôlés. Par exemple, dans une version extrêmement simplifiée, seul le nombre de terminaux connectés au réseau 4 par l'intermédiaire d'un même point d'accès est contrôlé. Dans cette version extrêmement simplifiée, les opérations 90 à 96 du procédé de la figure 2 sont supprimées.

Dans une autre variante, plus simple que celle décrite, l'opérateur du réseau 4 ne souhaite contrôler soit que l'identité des utilisateurs des terminaux soit que l'identité des terminaux. Pour cela, les opérations 94 à 100 ou les opérations 90, 92, 98 et 100 sont supprimées du procédé de la figure 2.

Le système 2 a été décrit dans le cas particulier où un modem ADSL est utilisé pour établir une liaison haut débit avec le réseau 4. En variante, ce modem ADSL est remplacé par un modem propre à établir une liaison avec un satellite ou encore par un modem propre à établir une liaison hertzienne par l'intermédiaire d'une boucle locale radio.

Dans le système 2 des critères d'accès sont définis pour chaque point d'accès. En variante, des critères d'accès sont définis pour chaque utilisateur et/ou terminal raccordé au réseau 4 par l'intermédiaire du même point d'accès. Ainsi, en fonction de l'utilisateur et/ou du terminal identifié, les critères d'accès au réseau 4 ne seront pas nécessairement les mêmes. Cette variante est, de préférence, combinée à la variante dans laquelle le point d'accès est capable d'établir simultanément plusieurs connexions de manière à, par exemple, affecter une connexion à chaque utilisateur ou terminal.

Finalement, le point d'accès 6 a été décrit comme comportant une borne de radiocommunication de manière à pouvoir raccorder simultanément plusieurs terminaux au modem 20 par l'intermédiaire de liaisons radio courtes distances, c'est-à-dire inférieures à 10, 50 ou 200 mètres. En variante la borne 22 est remplacée par une autre borne propre à remplir les mêmes fonctions mais par l'intermédiaire de liaisons filaires. Ainsi dans cette variante, les terminaux 10 et 12 sont simultanément raccordés par l'intermédiaire de liaisons filaires au point d'accès 6.

## Revendications

1. Procédé de contrôle de l'utilisation d'un point d'accès (6) à un réseau (4) de transmission d'informations, ce procédé comportant en outre les étapes consistant à :
a) relever automatiquement (88) des informations permettant de détecter la présence de plusieurs utilisateurs et/ou de plusieurs terminaux (10, 12) indépendants connectés audit réseau (4) de transmission d'informations par l'intermédiaire du même point d'accès,
b) comparer automatiquement (104) les informations relevées lors de l'étape a) à des critères d'accès audit réseau (4) de transmission d'informations prédéfinis, et
c) si les informations relevées ne correspondent pas aux critères d'accès prédéfinis, agir (110) sur au moins l'un des équipements impliqués dans l'établissement et/ou le maintien de la connexion entre ces utilisateurs et/ou terminaux et ledit réseau (4) de transmission d'informations, pour limiter l'accès audit réseau à partir de ce point d'accès, et
**caractérisé en ce que**, pour un point d'accès situé entre le réseau de transmission d'informations et un réseau local (26) auxquels sont raccordés des terminaux (10, 12) de télécommunication, l'étape de relevé comporte une opération (90) de relevé de l'adresse de destination de messages qui sont échangés par l'intermédiaire du réseau local (26) et de comparaison aux adresses des terminaux raccordés à ce même réseau local (26) pour permettre de détecter la présence de plusieurs utilisateurs et/ou de plusieurs terminaux (10, 12) indépendants connectés audit réseau par l'intermédiaire du point d'accès

2. Procédé selon la revendication 1, **caractérisé en ce que** les critères d'accès comportent une liste prédéfinie de terminaux autorisés à se connecter audit réseau (4) de transmission d'informations par l'intermédiaire de ce point d'accès, **en ce que** l'étape a) comporte une opération (90) d'identification des terminaux connectés audit réseau (4) de transmission d'informations par l'intermédiaire du point d'accès, **en ce que** l'étape b) comporte une opération (108) de comparaison de l'identité des terminaux identifiés à ladite liste prédéfinie de terminaux autorisés, et **en ce que** l'étape c) est déclenchée si au moins un terminal identifié n'appartient pas à ladite liste de terminaux autorisés.

3. Support (52) d'enregistrement d'informations, **caractérisé en ce qu'**il comporte des instructions pour l'exécution d'un procédé de contrôle selon l'une quelconque des revendications précédentes, lorsque ces instructions sont exécutées par un point d'accès réalisé à partir d'un calculateur électronique programmable.

4. Support (62) d'enregistrement d'informations, **caractérisé en ce qu'**il comporte des instructions pour l'exécution d'un procédé de contrôle selon l'une quelconque des revendications 1 à 2, lorsque ces instructions sont exécutées par un équipement de contrôle réalisé à partir d'un calculateur électronique programmable.

5. Système de contrôle de l'utilisation d'un point d'accès (6) à un réseau (4) de transmission d'informations, comportant :
- un module (50) de relevé des informations permettant de détecter la présence de plusieurs utilisateurs et/ou de plusieurs terminaux indépendants connectés audit réseau (4) de transmission d'informations par l'intermédiaire du même point d'accès,
- un module (56) de comparaison automatique des informations relevées par le module de relevé, à des critères d'accès audit réseau (4) de transmission d'informations prédéfinis pour ce point d'accès, et
- un module (58) d'action propre à agir sur au moins l'un des équipements impliqués dans l'établissement et/ou le maintien de la connexion entre ces utilisateurs et/ou terminaux et ledit réseau (4) de transmission d'informations, pour limiter l'accès audit réseau (4) de transmission d'informations à partir de ce point d'accès si les informations relevées ne correspondent pas aux critères d'accès prédéfinis,
**caractérisé en ce que**, pour un point d'accès situé entre le réseau de transmission d'informations et un réseau local (26) auquel sont raccordés des terminaux (10, 12) de télécommunication, le module de relevé (50) est apte à relever l'adresse de destination de messages qui sont échangés par l'intermédiaire du réseau local (26) et à la comparer aux adresses des terminaux raccordés à ce même réseau local (26) pour permettre de détecter la présence de plusieurs utilisateurs et/ou de plusieurs terminaux (10, 12) indépendants connectés audit réseau par l'intermédiaire du point d'accès.

6. Système selon la-revendication 5, **caractérisé en ce qu'**il comporte le point d'accès (6), le point d'accès étant équipé du module de relevé (50).

7. Système selon la revendication 6, **caractérisé en ce que** le point d'accès (6) est également équipé du module de comparaison (56) et/ou du module d'action (58).

8. Système selon la revendication 5 ou 6, **caractérisé en ce qu'**il comporte un équipement (60) de contrôle indépendant du point d'accès, cet équipement de contrôle étant raccordé au point d'accès par l'intermédiaire dudit réseau (4) de transmission d'informations, et **en ce que** cet équipement de contrôle est équipé du module d'action (58).

9. Point d'accès (6) apte à être mis en oeuvre dans un système de contrôle conforme à l'une quelconque des revendications 5 à 8, ce point d'accès (6) étant également apte à raccorder simultanément plusieurs terminaux (10, 12) de télécommunication indépendants audit réseau (4) de transmission d'informations, **caractérisé en ce qu'**il est équipé du module de relevé (50) tel qu'il est défini dans l'une quelconque des revendications 5 à 8.

10. Equipement de contrôle (60) apte à être mis en oeuvre dans un système selon l'une quelconque des revendications 5 à 8, cet équipement de contrôle étant également adapté pour être raccordé à chacun des points d'accès (6) par l'intermédiaire du réseau (4) de transmission d'informations, **caractérisé en ce qu'**il est équipé du module d'action (58) tel qu'il est défini dans l'une quelconque des revendications 5 à 8.

## Claims

1. Control method for the use of an access point (6) to a data transmission network (4), this method furthermore comprising the steps consisting in:
a) automatically acquiring (88) data making it possible to detect the presence of several users and/or of several independent terminals (10, 12) connected to the said data transmission network (4) by the intermediary of a same access point,
b) automatically comparing (104) the data acquired during step a) with predefined criteria for access to the said data transmission network (4), and
c) if the data acquired does not correspond to the predefined access criteria, acting (110) on at least one of the equipments involved in the establishment and/or the maintaining of the connection between these users and/or terminals and the said data transmission network (4), in order to limit access to the said network from that access point, and
**characterized in that**, for an access point situated between the data transmission network and a local network (26) to which telecommunication terminals (10, 12) are connected, the acquisition step comprises an operation (90) of acquiring the destination address of messages which are exchanged by the intermediary of a local network (26) and of comparison with the addresses of the terminals connected to that same access point (26) in order to make it possible to detect the presence of several users and/or of several independent terminals (10, 12) connected to the said network by the intermediary of the access point.

2. Method according to Claim 1, **characterized in that** the access criteria comprise a predefined list of terminals authorized to be connected to the said data transmission network (4) by the intermediary of that access point, **in that** step a) comprises an operation (90) of identification of the terminals connected to the said data transmission network (4) by the intermediary of the access point, **in that** step b) comprises an operation (108) of comparison of the identity of the identified terminals with the said predefined list of authorized terminals, and **in that** step c) is initiated if at least one identified terminal does not belong to the said list of authorized terminals.

3. Data recording medium (52), **characterized in that** it comprises instructions for the execution of a control method according to any one of the preceding claims, when these instructions are executed by an access point produced from a programmable electronic computer.

4. Data recording medium (62), **characterized in that** it comprises instructions for the execution of a control method according to any one of Claims 1 to 2, when these instructions are executed by a control equipment produced from a programmable electronic computer.

5. Control system for using an access point (6) to a data transmission network (4), comprising:
- a module (50) for acquiring data making it possible to detect the presence of several users and/or of several independent terminals connected to the said data transmission network (4) by the intermediary of the same access point,
- a module (56) for the automatic comparison of data acquired by the acquisition module with access criteria to the said data transmission network (4) that are predefined for that access point, and
- an action module (58) able to act on at least one of the equipments involved in the establishment and/or the maintaining of the connection between these users and/or terminals and the said data transmission network (4), in order to limit access to the said data transmission network (4) from that access point if the data acquired does not correspond to the predefined access criteria,
**characterized in that**, for an access point situated between the data transmission network and a local network (26) to which telecommunication terminals (10, 12) are connected, the acquisition module (50) is able to acquire the destination address of messages which are exchanged by the intermediary of the local network (26) and to compare it with the addresses of the terminals connected to that same local network (26) in order to make it possible to detect the presence of several users and/or of several independent terminals (10, 12) connected to the said network by the intermediary of the access point.

6. System according to Claim 5, **characterized in that** it comprises the access point (6), the access point being equipped with the acquisition module (50).

7. System according to Claim 6, **characterized in that** the access point (6) is also equipped with the comparison module (56) and/or with the action module (58).

8. System according to Claim 5 or 6, **characterized in that** it comprises an equipment (60) for the independent control of the access point, this control equipment being connected to the access point by the intermediary of the said data transmission network (4), and **in that** this control equipment is equipped with the action module (58).

9. Access point (6) able to be used in a control system according to any one of Claims 5 to 8, this access point (6) also being able to connect simultaneously several independent telecommunication terminals (10, 12) to the said data transmission network (4), **characterized in that** it is equipped with the acquisition module (50) as defined in any one of Claims 5 to 8.

10. Control equipment (60) able to be used in a system according to any one of Claims 5 to 8, this control equipment also being designed to be connected to each of the access points (6) by the intermediary of the data transmission network (4), **characterized in that** it is equipped with the action module (58) as defined in any one of Claims 5 to 8.

## Patentansprüche

1. Verfahren zur Benutzungssteuerung eines Zugangspunktes (6) zu einem Informationsübertragungsnetz (4), das u.a. die folgenden Schritte aufweist:
a) automatische Erfassung (88) von Informationen, die es gestatten, die Anwesenheit mehrerer Benutzer und/oder mehrerer Endgeräte (10, 12) zu detektieren, die unabhängig voneinander über denselben Zugangspunkt an das genannte Informationsübertragungsnetz (4) angeschlossen sind,
b) automatischer Vergleich (104) der in Schritt a) erfaßten Informationen mit vordefinierten Kriterien für den Zugang zu dem genannten Informationsübertragungsnetz (4) und
c) wenn die erfaßten Informationen nicht den vordefinierten Zugangskriterien entsprechen, einwirken (110) auf wenigstens eine der an der Herstellung und/oder Aufrechterhaltung der Verbindung zwischen diesen Benutzern und/oder Endgeräten und dem genannten Informationsübertragungsnetz (4) beteiligten Einrichtungen, um den Zugang zu dem genannten Netz von diesem Zugangspunkt aus zu begrenzen,
**dadurch gekennzeichnet, daß,** für einen Zugangspunkt, der zwischen dem Informationsübertragungsnetz und einem lokalen Netz (26) liegt, an das Endgeräte (10, 12) für die Telekommunikation angeschlossen sind, der Schritt der Erfassung eine Operation (90) der Erfassung der Zieladresse von Nachrichten, die über das lokale Netz (26) ausgetauscht werden, und des Vergleichs mit Adressen von Endgeräten umfaßt, die an dasselbe lokale Netz (26) angeschlossen sind, um die Feststellung der Anwesenheit von mehreren Benutzern und/oder mehreren Endgeräten (10, 12) zu ermöglichen, die unabhängig voneinander über diesen Zugangspunkt an das genannte Netz angeschlossen sind.

2. Verfahren nach Anspruch 1, **dadurch gekennzeichnet, daß** die Zugangskriterien eine vordefinierte Liste von Endgeräten umfassen, die dazu authorisiert sind, sich über diesen Zugangspunkt an das genannte Informationsübertragungsnetz (4) anzuschließen, daß der Schritt a) eine Operation (90) der Identifikation von Endgeräten umfaßt, die über den Zugangspunkt an das genannte Informationsübertragungsnetz (4) angeschlossen sind, daß der Schritt b) eine Operation (108) des Vergleichs der Identität der identifizierten Endgeräte mit der genannten vordefinierten Liste von authorisierten Endgeräten umfaßt und daß der Schritt c) ausgelöst wird, wenn wenigstens ein identifiziertes Endgerät nicht zu der Liste von authorisierten Endgeräten gehört.

3. Datenträger (52), **dadurch gekennzeichnet, daß** er Befehle enthält, die zur Ausführung eines Steuerverfahrens nach einem der vorstehenden Ansprüche dienen, wenn diese Befehle von einem Zugangspunkt ausgeführt werden, der auf der Basis eines programmierbaren elektronischen Rechners aufgebaut ist.

4. Datenträger (62), **dadurch gekennzeichnet, daß** er Befehle enthält, die dazu dienen, ein Verfahren nach einem der Ansprüche 1 bis 2 auszuführen, wenn diese Befehle von einer Steuereinrichtung ausgeführt werden, die auf der Basis eines programmierbaren elektronischen Rechners aufgebaut ist.

5. System zur Benutzungssteuerung eines Zugangspunktes (6) zu einem Informationsübertragungsnetz (4), mit:
a) einem Modul (50) zur Erfassung von Informationen, die es gestatten, die Anwesenheit mehrerer Benutzer und/oder mehrerer Endgeräte (10, 12) zu detektieren, die unabhängig voneinander über denselben Zugangspunkt an das genannte Informationsübertragungsnetz (4) angeschlossen sind,
b) einem Modul (56) zum automatischen Vergleich der in von dem Erfassungsmodul erfaßten Informationen mit für diesen Zugangspunkt vordefinierten Kriterien für den Zugang zu dem genannten Informationsübertragungsnetz (4) und
c) einem Aktionsmodul (58), das dazu geeignet ist, auf wenigstens eine der an der Herstellung und/oder Aufrechterhaltung der Verbindung zwischen diesen Benutzern und/oder Endgeräten und dem genannten Informationsübertragungsnetz (4) beteiligten Einrichtungen einzuwirken, um den Zugang zu dem genannten Informationsübertragungsnetz (4) von diesem Zugangspunkt aus zu begrenzen, wenn die erfaßten Informationen nicht den vordefinierten Zugangskriterien entsprechen,
**dadurch gekennzeichnet, daß**, für einen Zugangspunkt, der zwischen dem Informationsübertragungsnetz und einem lokalen Netz (26) liegt, an das Endgeräte (10, 12) für die Telekommunikation angeschlossen sind, das Erfassungsmodul (50) dazu eingerichtet ist, die Zieladresse von Nachrichten, die über das lokale Netz (26) ausgetauscht werden, zu erfassen und mit Adressen von Endgeräten zu vergleichen, die an dasselbe lokale Netz (26) angeschlossen sind, um die Feststellung der Anwesenheit von mehreren Benutzern und/oder mehreren Endgeräten (10, 12) zu ermöglichen, die unabhängig voneinander über diesen Zugangspunkt an das genannte Netz angeschlossen sind.

6. System nach Anspruch 5, **dadurch gekennzeichnet, daß** es den Zugangspunkt (6) umfaßt und daß dieser Zugangspunkt mit dem Erfassungsmodul (50) ausgerüstet ist.

7. System nach Anspruch 6, **dadurch gekennzeichnet, daß** der Zugangspunkt (6) auch mit dem Vergleichsmodul (56) und/oder dem Aktionsmodul (58) ausgerüstet ist.

8. System nach Anspruch 5 oder 6, **dadurch gekennzeichnet, daß** es eine unabhängige Steuereinrichtung (60) für den Zugangspunkt aufweist, die über das genannte Informationsübertragungsnetz (4) mit dem Zugangspunkt verbunden ist, und daß diese Steuereinrichtung mit dem Aktionsmodul (58) ausgerüstet ist.

9. Zugangspunkt (6), der dazu ausgebildet ist, in einem Steuersystem nach einem der Ansprüche 5 bis 8 eingesetzt zu werden, wobei dieser Zugangspunkt (6) auch dazu ausgebildet ist, mehrere unabhängige Telekommunikations-Endgeräte (10, 12) gleichzeitig mit dem Informationsübertragungsnetz (4) zu verbinden, **dadurch gekennzeichnet, daß** er mit dem Erfassungsmodul (50) ausgerüstet ist, wie es in einem der Ansprüche 5 bis 8 definiert ist.

10. Steuereinrichtung (60), die dazu ausgebildet ist, in einem Steuersystem nach einem der Ansprüche 10 bis 20 eingesetzt zu werden, wobei diese Steuereinrichtung auch dazu ausgebildet ist, über das Informationsübertragungsnetz (4) mit jedem der Zugangspunkte (6) verbunden zu werden, **dadurch gekennzeichnet, daß** sie mit dem Aktionsmodul (58) ausgerüstet ist, wie es in einem der Ansprüche 5 bis 8 definiert ist.
